# EUROPÄISCHE PATENTSCHRIFT

(11) **EP 3 008 881 B1**
(45) Veröffentlichungstag und Bekanntmachung des Hinweises auf die Patenterteilung: **04.12.2019**
(21) Anmeldenummer: 14734726.4
(22) Anmeldetag: 10.06.2014
(51) Int. Cl.: H04M 1/06, H02J 7/00

(54) **LADESTATION FÜR TELEKOMMUNIKATIONSENDGERÄTE**
CHARGING STATION FOR TELECOMMUNICATION TERMINALS
POSTE DE CHARGE POUR TERMINAUX DE TÉLÉCOMMUNICATIONS

(30) Priorität: 13.06.2013 DE 102013009880
(43) Veröffentlichungstag der Anmeldung: 20.04.2016
(73) Patentinhaber: Dittrich, Klemens, 42109 Wuppertal (DE)
(72) Erfinder: DITTRICH, Andreas, 50674 Köln (DE)
(74) Vertreter: Schulte & Schulte
(86) Internationale Anmeldenummer: PCT/DE2014/100193
(87) Internationale Veröffentlichungsnummer: WO 2014/198262

(56) Entgegenhaltungen:
- WO-A1-03/088632
- US-A1- 2007 216 352
- US-A1- 2009 278 495
- US-A1- 2011 025 263

## Beschreibung

Die Erfindung betrifft eine Station zur Aufladung und Aufbewahrung von Telekommunikationsendgeräten.

Telekommunikationsendgeräte wie etwa Mobiltelefone oder Tablet-Computer erfreuen sich so großer Beliebtheit, dass in vielen Haushalten oder Büros gleich mehrere dieser Geräte zu finden sind. Jeder Benutzer kennt das Problem, dass man seine Geräte häufig verlegt oder keinen geeigneten Platz zum Aufladen der Akkus dieser Geräte findet. Letzteres gilt z. B. auch für den Fall, dass man sich nicht zuhause oder im Büro, sondern an einem Ort befindet, mit dem man nicht gut vertraut ist, etwa in einem Hotel. Bereits bekannt sind Stationen zur Aufnahme auch mehrerer solcher tragbarer Geräte, die in ihrer Handhabbarkeit jedoch stark eingeschränkt sind, weil etwa nicht mehrere Geräte oder nicht mehrere Geräte verschiedenen Typs aufgenommen werden können oder weil diese Stationen durch die Notwendigkeit, einen Netzanschluss herzustellen wiederum so kompliziert bauen, dass die Benutzer ihre Endgeräte dann doch wieder separat aufbewahren bzw. aufladen. Solche Geräte sind US 2009/278495 A1, US 2001/025263 A1, WO 03/088632 A1 und US 2007/216352 A1 offenbart.

Damit stellt sich der vorliegenden Erfindung die Aufgabe, eine Station zur Aufladung und Aufbewahrung von Telekommunikationsendgeräten zu schaffen, die zur Aufnahme mehrerer, auch unterschiedlicher Endgeräte und für deren schnellen und sicheren Anschluss an die Stromverbindung geeignet und leicht bedienbar ist.

Diese Aufgabe wird durch eine Station entsprechend dem unabhängigen Anspruch 1 gelöst.

Weitere vorteilhafte Ausgestaltungen sind in den abhängigen Ansprüchen offenbart.

Gegenstand der Erfindung ist also eine solche Station mit einer oberen Etage, in der eine Plattform angeordnet ist, die über eine Mehrzahl von hintereinander angeordneten länglichen Aufnahmen verfügt. Eine solche Aufnahme dient jeweils zur Aufnahme mindestens eines Telekommunikationsendgerätes, wobei die Form dieser Aufnahmen so gewählt ist, dass auch unterschiedliche Geräte dort aufgenommen werden können. In der unteren Etage verbleibt ein Freiraum, der zur Unterbringung z. B. von Kabeln oder Steckverbindungen oder auch einer Verteilerbox genutzt werden kann. Zur Verbindung der auf der Plattform gelagerten Endgeräte und des darunter befindlichen Freiraums sind in den Aufnahmen Durchführungen vorgesehen.

Um den Freiraum unterhalb der Plattform zu gewährleisten, ist daran gedacht, dass die Plattform erhöht, d. h. auf mindestens zwei, vorzugsweise auf vier Füßen gelagert ist. Diese sollten sich an gegenüberliegenden Flanken der Plattform bzw. in deren vier Ecken befinden.

Es ist als besonders zweckmäßig anzusehen, wenn die Plattform als Aufnahmen für die Geräte dienende Vertiefungen aufweist, deren Länge, Breite und Tiefe auf handelsübliche Telekommunikationsendgeräte abgestimmt ist. Die Endgeräte werden also hintereinander in die als Vertiefungen ausgebildeten Aufnahmen eingesetzt, wobei diese so dimensioniert sind, dass unterschiedliche Gerätetypen dort sicheren Halt haben und unkompliziert an das Stromnetz anschließbar sind.

Eine besonders direkte und einfach handhabbare Verbindung zwischen den auf der Plattform angeordneten Geräten und dem Freiraum darunter ist geschaffen, wenn die Durchführungen für die Versorgungskabel und/oder Steckverbindungen an der Unterseite der Aufnahmen vorgesehen sind. Das heißt an der Unterseite der Aufnahmen befinden sich Öffnungen zur Aufnahme und/oder Durchführung der Kabel oder Stecker. Somit muss der Benutzer zum Anschluss der Geräte lediglich den entsprechenden Stecker in sein Endgerät einsetzen und die Verbindung z. B. zu einer unterhalb der Plattform positionierten Verteilerbox zur Zusammenführung der Endgeräte ist hergestellt.

Dass in dem Freiraum unterhalb der Plattform eine Verteilerbox angeordnet ist, an welche die Telekommunikationsendgeräte anschließbar sind und welche über ein gemeinsames Versorgungskabel mit dem Versorgungsnetz verbindbar ist, zeichnet die Erfindung ebenfalls aus. Einerseits werden die Endgeräte mit ihren Steckverbindungen dort angeschlossen, andererseits wird die Verteilerbox über ein einziges Versorgungskabel mit dem Versorgungsnetz verbunden. Denkbar ist in diesem Zusammenhang auch der Einsatz eines USB-Hubs, über das die angeschlossenen Endgeräte zusammengeführt und dann gemeinsam mit Strom versorgt werden können.

Als weiteres Bauteil der Station ist vorgesehen, dass diese ein Gehäuse zur Aufnahme der Plattform aufweist, das zur Aufnahme von Kabeln, Steckern und der angesprochenen Verteilerbox geeignet ist und diese Aggregate so umschließt, dass sie ohne den ansonsten üblichen Kabelsalat praktisch verschwinden.

Sollten zur einfacheren Bedienung und Demontage von Gehäuse und Plattform Umrüstungen notwendig sein, wird vorgeschlagen, dass die Plattform an zwei gegenüberliegenden Flanken Ausnehmungen zur Demontage der Plattform aus dem Gehäuse aufweist. Auf diese Weise kann die Plattform mit zwei Fingern gegriffen und leicht aus dem Gehäuse herausgezogen werden.

Damit die Plattform an ein Versorgungsnetz angeschlossen werden kann, weist das Gehäuse mindestens eine Öffnung zur Durchführung voi Versorgungskabeln zur Verbindung mit dem Versorgungsnetz auf, das dann auch das einzige Kabel ist, mit dem es der Benutzer noch zu tun hat. In einer bevorzugten Ausführungsform weist das Gehäuse auf einer Längs- und einer Querseite mittig jeweils mindestens einen senkrecht verlaufenden Schlitz als Öffnung auf.

In einer alternativen Ausführungsform ist vorgesehen, dass das Gehäuse und/oder die Plattform Steckanschlüsse aufweisen, etwa Steckanschlüsse für Netzstecker oder USB-Kabel.

Die Erfindung betrifft außerdem eine in ein Möbel integrierte Station entsprechend dem unabhängigen Anspruch 1 zur Aufladung und Aufbewahrung von Telekommunikationsendgeräten, mit mindestens einer in einen waagerecht verlaufenden Abschnitt des Möbels integrierten länglichen Aufnahme für jeweils mindestens ein Telekommunikationsendgerät, wobei in dem waagerecht verlaufenden Abschnitt des Möbels eine Durchführung für Versorgungskabel und/oder Steckverbindungen der Telekommunikationsendgeräte vorgesehen ist.

Bei dieser Variante der Erfindung ist die Station zur Aufladung und Aufbewahrung der Endgeräte in ein Möbel integriert, bei dem es sich zum Beispiel um eine Tischplatte, einen Schrank-, einen Regalboden oder eine Arbeitsplatte handeln kann. In solch einem waagerechten Abschnitt, z. B. in einer Schreibtischplatte ist mindestens eine erfindungsgemäße Aufnahme vorgesehen. Sie umfasst eine Durchführung für Kabel und/oder Stecker, so dass sämtliches Beiwerk der Geräte unterhalb der Platte verschwindet. Diese Art von Station ermöglicht eine gute Bedienbarkeit des Telekommunikationsendgerätes und ist darüber hinaus auch optisch sehr vorteilhaft, weil sämtliche Anschlüsse versteckt werden können und das Gerät gewissermaßen aus der Möbelplatte herausragt.

Empfohlen wird nicht nur, dass die Aufnahme für die Geräte als Vertiefung ausgebildet ist, deren Länge, Breite und Tiefe auf handelsübliche Telekommunikationsendgeräte abgestimmt ist, sondern die Aufnahme sollte auch mehrere, zu unterschiedlichen Telekommunikationsendgeräten korrespondierend ausgebildete Vertiefungen aufweisen, sodass mehrere unterschiedliche Geräte dort positionierbar sind.

Insbesondere ist daran gedacht, dass die Vertiefungen nach ihren Abmessungen abgestuft ausgebildet sind, wobei kleinere Vertiefungen in den Boden der nächst größeren Vertiefung eingelassen sind. Eine erste, größere Vertiefung ist also z. B. in ihren Abmessungen korrespondierend zu einem Tablet-Computer ausgebildet. Mittig in dieser größeren Vertiefung ist eine kleinere "Vertiefung in der Vertiefung" vorgesehen, die zur Aufnahme eines Mobiltelefons geeignet und korrespondierend zu einem solchen ausgebildet ist.

Eine vorteilhafte Ausführung der Erfindung sieht außerdem vor, dass die Durchführung für die Versorgungskabel und/oder Steckverbindungen in dem Boden der Aufnahme vorgesehen ist, damit, wie bereits angesprochen, Kabel und Stecker unterhalb des Möbels oder Möbelabschnitts, etwa unter einer Tischplatte, verschwinden können.

In erster Linie aus optischen Gründen ist es zweckmäßig, wenn das Möbel mit einem korrespondierend zu der Aufnahme ausgebildeten Einsatz ausgerüstet ist. Wird also gerade kein Gerät benutzt bzw. aufgeladen, kann ein Einsatz in der Aufnahme positioniert werden, der in seine Abmessungen denen der Vertiefung entspricht und zweckmäßigerweise bündig mit der Oberkante der Möbelplatte abschließt.

Der Einsatz kann auf einfache Weise aus der Ausnehmung durch eine Art Wippkonstruktion entnommen werden. In diesem Sinne wird vorgeschlagen, dass der Einsatz an mindestens einem Ende an seiner Unterseite eine Abschrägung aufweist. Dazu muss der Einsatz lediglich an einem Ende ein wenig nach unten gedrückt werden, anschließend kann der Einsatz an seinen gegenüberliegenden Ende, wo er dank der Wippkonstruktion aus die Platte ein Stück weit herausragt, gegriffen und aus der Ausnehmung entnommen werden.

Die Erfindung zeichnet sich insbesondere dadurch aus, dass eine Station geschaffen ist, die gleichsam für die Aufbewahrung und Aufladung von Telekommunikationsendgeräten unterschiedlichen Typs geeignet ist. Die Station umfasst eine Plattform mit mehreren hintereinander positionierten länglichen Aufnahmen, die so ausgebildet sind, dass sie z. B. entweder Mobiltelefone oder Tablet-Computer aufnehmen können. In der Station können die Geräte mit ihren in der Regel an den Längs- oder Querseiten befindlichen Anschlüssen in den Aufnahmen angedockt werden. An ihrer Unterseite weisen die Aufnahmen eine Durchführung für Kabel oder Steckverbindungen in den Freiraum unterhalb der Plattform auf, wo Kabel, Anschlüsse oder Verteiler für verschiedene Geräte zusammengeführt werden können. Über eine gemeinsame externe Verbindung in Form eines Kabels mit Netzanschluss oder eines USB-Hubs wird die Station dann zentral mit Strom versorgt. Denkbar ist es auch, die erfindungsgemäße Station in ein Möbel, vor allem in eine Tisch- oder Arbeitsplatte zu integrieren. Kabel und Stecker werden durch eine in der Aufnahme vorgesehene Durchführung unterhalb der Platte geführt und verschwinden somit auch auf elegante Weise.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
- Figur 1: eine Station mit drei Endgeräten in perspektivischer Ansicht,
- Figur 2: die Station in Draufsicht,
- Figur 3: ein Gehäuse,
- Figur 4: eine Plattform in perspektivischer Ansicht,
- Figur 5: eine Plattform in Stirnansicht,
- Figur 6: eine Plattform in Draufsicht,
- Figur 7: die Verbindung zwischen Plattform und Verteilerbox in als Explosionszeichnung,
- Figur 8: die Darstellung gemäß Figur 7 perspektivisch,
- Figur 9: eine Variante zu Figur 8,
- Figur 10: eine Station mit außenliegenden Anschlüssen,
- Figur 11: eine Variante zur Figur 10,
- Figur 12: eine Tischplatte mit Station in Draufsicht,
- Figur 13: eine Tischplatte mit Station in perspektivischer Ansicht,
- Figur 14: einen Einsatz in der Aufnahme und
- Figur 15: einen Einsatz beim Herausnehmen aus der Aufnahme.

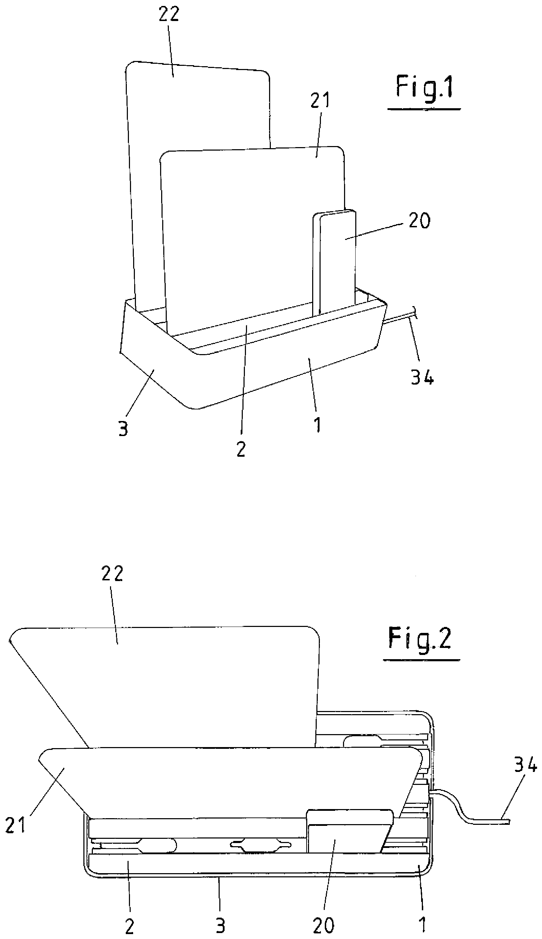

In Figur 1 ist eine Station 1 mit den zentralen Bauteilen Gehäuse 3 und Plattform 2 dargestellt. Gut erkennbar ist, dass die Anschlüsse zu den drei hier aufbewahrten und ggf. auch aufzuladenden Telekommunikationsendgeräten 20, 21, 22 komplett in der Station 1 verschwinden. Nur ein zentrales Versorgungskabel 4 dient zum Anschluss an ein Versorgungsnetz.

Veranschaulicht ist die Situation auch in Figur 2 mit dem Mobiltelefon 20 und den beiden Tablet-Computern 21 und 22.

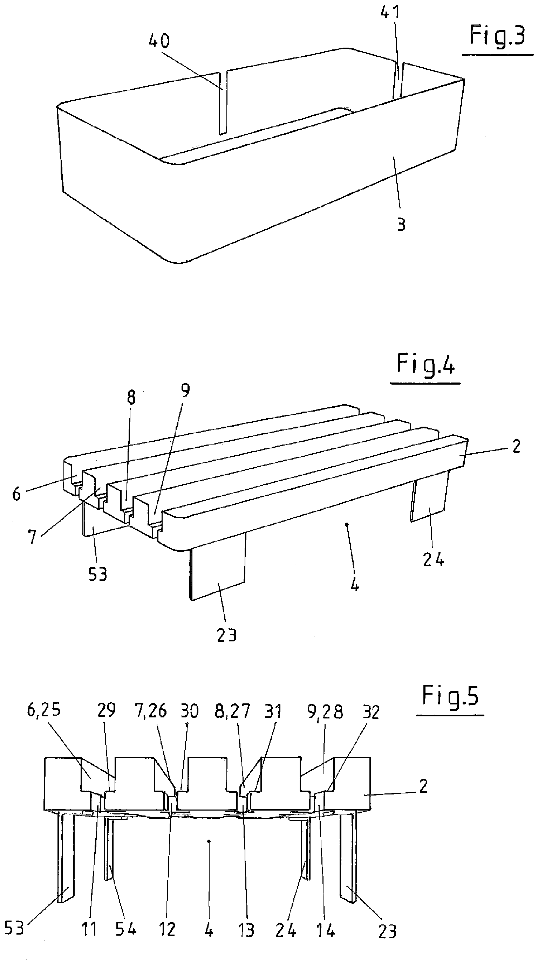

Ein Gehäuse 3 ohne Plattform zeigt Figur 3 mit den beiden als senkrecht verlaufende Schlitze ausgebildeten Öffnungen 40 und 41 zur Durchführung der hier nicht dargestellten Kabel aus dem Gehäuse 3 bzw. der Station heraus zur Stromversorgung.

In das Gehäuse gem. Figur 3 wird das in Figur 4 dargestellte Bauteil eingesetzt. Es handelt sich dabei um die Plattform 2 mit vier Füßen, von denen die drei mit den Bezugszeichen 23, 24 und 53 versehenen in den vier Ecken unterhalb der Plattform 2 hier erkennbar sind. Damit bildet sich ein Freiraum 4 aus, der zur Unterbringung der unterschiedlichsten Aggregate genutzt werden kann. In der Plattform 2 befinden sich vier mit den Bezugszeichen 6, 7, 8 und 9 versehene längliche Aufnahmen für die hier nicht dargestellten Kommunikationsgeräte.

Figur 5 veranschaulicht vor allem den Blick in die als Vertiefungen 25 - 28 und zusätzlich zu handelsüblichen Kommunikationsgeräten korrespondierend ausgebildeten Aufnahmen 6, 7, 8 und 9 in der Plattform 2 mit den Durchführungen 11 - 14 für Kabel und/oder Steckverbindungen an den jeweiligen Unterseiten 29 - 32 der Aufnahmen 6 - 9.. Nochmals gut erkennbar ist in der Darstellung gemäß Figur 5 auch der große Freiraum 4, der geschaffen ist, da die Plattform 2 auf den Füßen 23, 24, 53, 54 lagert.

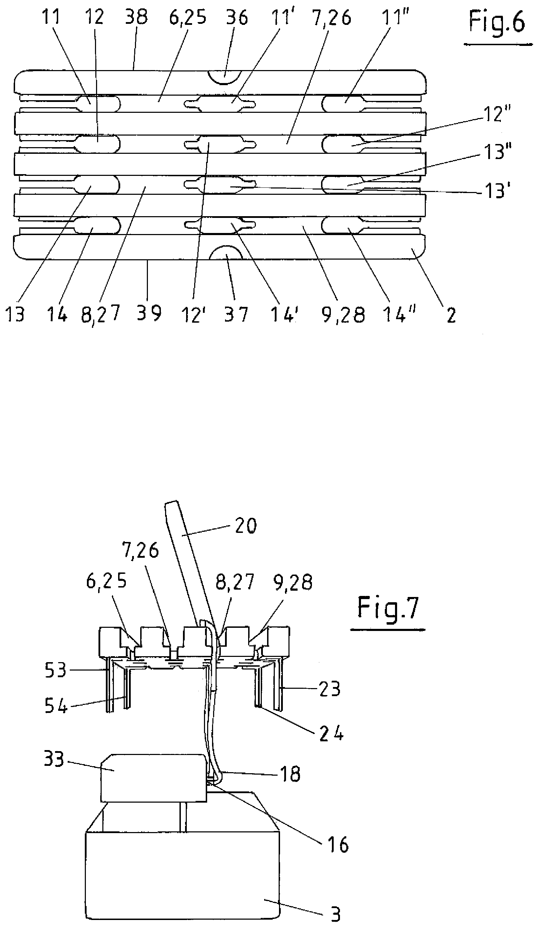

In Draufsicht stellt Figur 6 die Plattform 2 mit ihren unterschiedlichen Aufnahmen dar. Vier hintereinander positionierte längliche Aufnahmen 6 - 9 umfassen jeweils drei Durchführungen 11 - 14, korrespondierend ausgebildet und angeordnet zu handelsüblichen Kommunikationsgeräten in den Vertiefungen 25 - 28. An zwei Flanken 38, 39 der Plattform 2 befinden sich Ausnehmungen 36, 37, in die z. B. Daumen und Zeigefinger eingesetzt werden können, um die Plattform 2 auf einfache Weise aus dem Gehäuse zu demontieren.

Eine Explosionsdarstellung gemäß Figur 7 zeigt einerseits das in die Plattform 2, genauer gesagt in die als Vertiefung 27 ausgebildete Aufnahme 8 eingesetzte Telekommunikationsendgerät, hier das Mobiltelefon 20 und andererseits das Innenleben des Gehäuses 3 in Form der Verteilerbox 33. Über Stecker 16 bzw. Kabel 18 ist die Verbindung zwischen dem Mobiltelefon 20 und der Box 33 zwecks Aufladung desselben hergestellt.

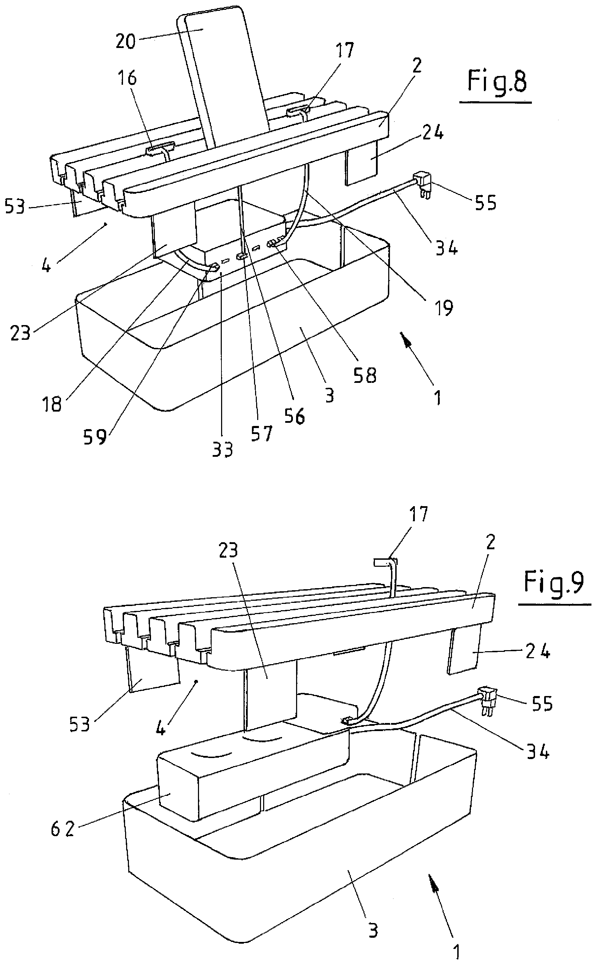

Ähnliches zeigt Figur 8 mit den Steckverbindungen 16, 17, die zur Verdeutlichung der Einfachheit dieses Mechanismus als zusätzliche Anschlussmöglichkeiten aus der Plattform 2 herausragen und über Kabel 18, 19 und Steckverbindungen 58, 59 mit der Box 33 verbunden werden können. Eine Verbindung besteht bereits über den Stecker 57 und das Kabel 56 zum Mobiltelefon 20. Von der Verteilerbox 33 führt ein Versorgungskabel 34 aus der Station 1 heraus und kann dann über den Stecker 55 und einen Versorgungsnetz verbunden werden.

Eine Variante zu der Station in Figur 8 zeigt die Station gemäß Figur 9, nämlich einen Mehrfachstecker 62, an den hier nicht dargestellte Endgeräte mit Steckern angeschlossen und dort aufgeladen werden können, indem über das Versorgungskabel 34 eine Verbindung zu dem Stecker 55 für den äußeren Anschluss gegeben ist.

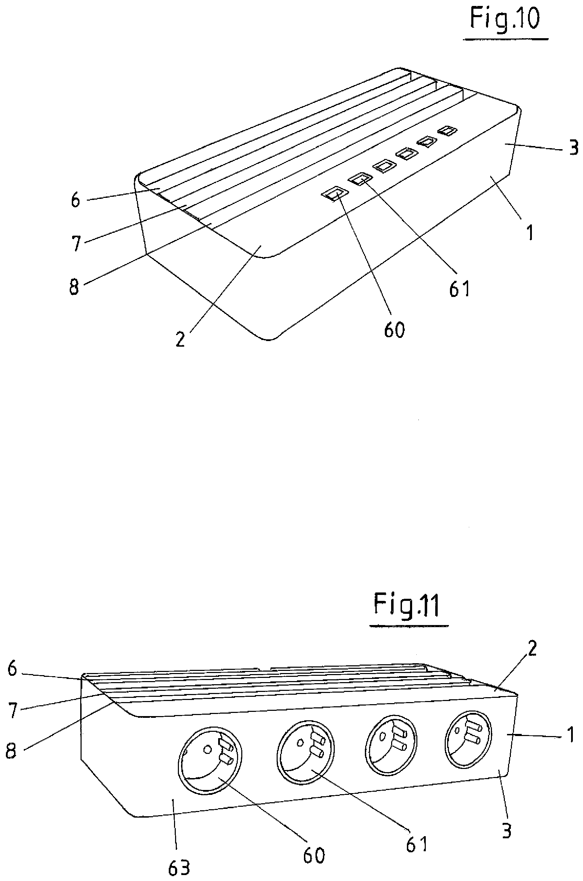

Eine weitere Alternative für die Ausbildung der Station 1 ist in Figur 10 dargestellt. Beispielhaft mit dem Bezugszeichen 60 und 61 bezeichnete Anschlüsse auf der Plattform 2 dienen dazu, USB-Stecker anschließen, um eine Verbindung mit dem hier nicht dargestellten Innenleben der Station 1 herstellen zu können. Die Zahl der Anschlüsse 60, 61 kann natürlich beliebig variiert werden. Dabei ist jeweils ein Anschluss 60, 61 etc. einer Aufnahme 6, 7 etc. zugeordnet, was ggf. durch Markierungen veranschaulicht werden kann.

Ähnliches gilt für die Station 1 in der Darstellung gemäß Figur 11 und die Anschlüsse 60, 61 für Stecker, hier positioniert in der Stirnwand 63.

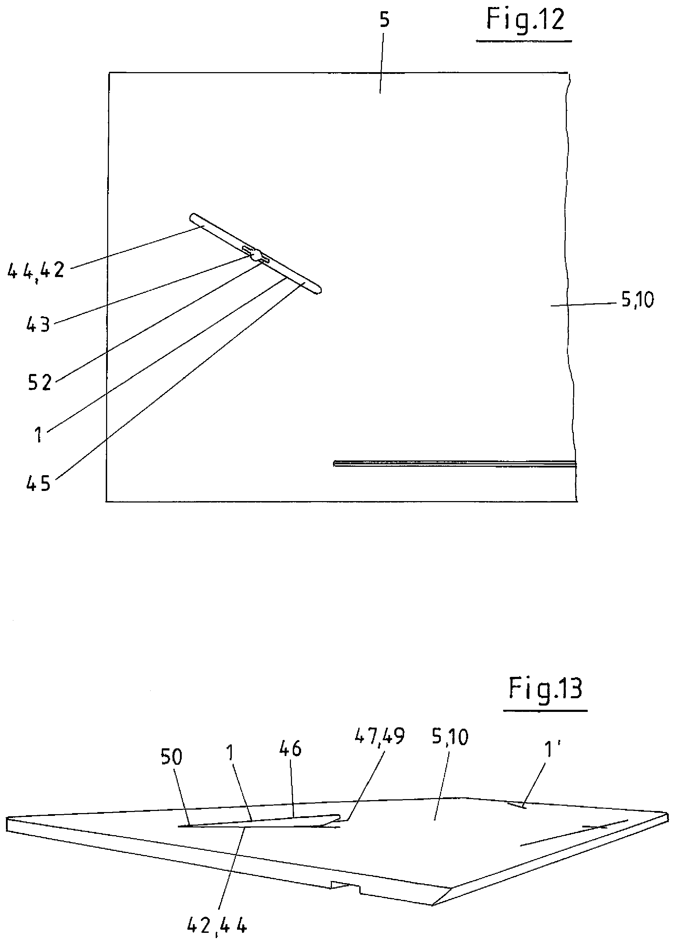

Die Variante der Erfindung, bei der eine Aufnahme 42 in ein Möbel integriert ist, zeigen die Figuren 12 - 15. Zunächst lässt Figur 12 den Blick auf ein Möbel 5 in Form einer Schreibtisch- oder Arbeitsplatte erkennen. Die Aufnahme 42 ist dabei schräg angeordnet, sodass der Bildschirm eines hier nicht dargestellten Telekommunikationsendgerätes für den Benutzer auch unter ergonomischen Gesichtspunkten gut einsehbar und das Gerät bestens bedienbar ist. Die Aufnahme 42 ist als Vertiefung 44 ausgebildet, wobei sich in der Mitte des Bodens 45 der Aufnahme 42 eine "Vertiefung 52 in der Vertiefung 44" befindet. Während die größere, flachere Vertiefung 44 korrespondierend zu einem Tablet-Computer ausgebildet ist, dient die kleinere, tiefer liegende Vertiefung 52 zur Aufnahme eines Mobiltelefons. Die Durchführung 43 ist zentral und somit so positioniert, dass die Versorgungskabel für alle Gerätevarianten direkt unter der Platte 10 verschwinden.

Figur 13 zeigt in perspektivischer Ansicht solch eine Schreibtisch- oder Arbeitsplatte mit zwei Stationen 1 und 1' und einem Einsatz 46 in der Aufnahme 42, der an seinem Ende 49, wo dieser auch eine Abschrägung 47 erkennen lässt, ein Stück weit herausragt, nachdem am gegenüberliegenden Ende 50 zur Betätigung dieser Wippkonstruktion der Einsatz 46 ein Stück weit nach unten gedrückt wurde.

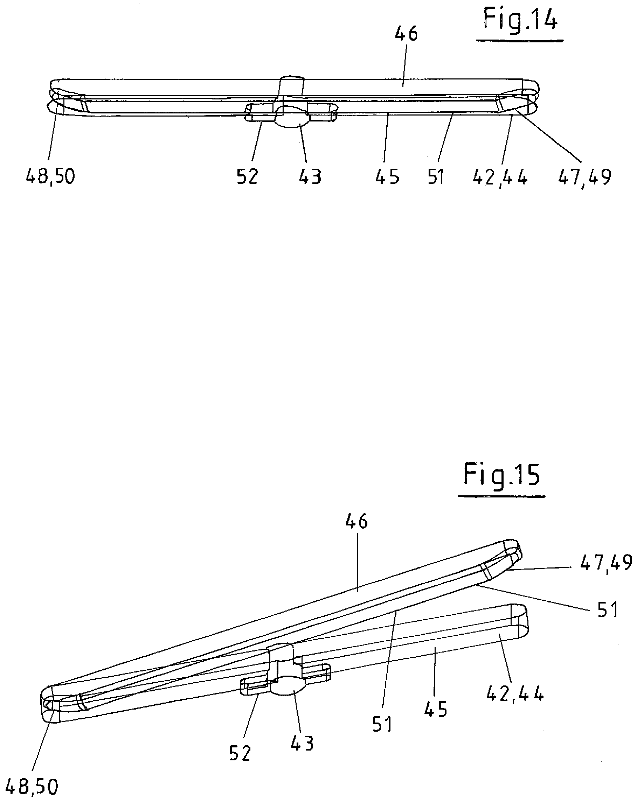

Figur 14 veranschaulicht einen Einsatz 46 in der Aufnahme 42 bzw. Vertiefung 44, die hier ohne Möbel und Telekommunikationsendgeräte dargestellt sind. Veranschaulicht werden soll hier vor allem die Wippkonstruktion des Einsatzes 6 an seinen beiden Enden 49 und 50 mit den an der Unterseite 51 des Einsatzes 46 vorgesehenen Anschrägungen 47, 48. Zentral in der Aufnahme 42 befindet sich die Durchführung 43, daneben die korrespondierend zu einem vergleichsweise kleinen Mobiltelefon ausgebildete Vertiefung 52 für dessen Aufnahme.

Durch Aufbringen einer Kraft im Bereich der Abschrägung 48 am Ende 50 des Einsatzes 16 wird dieser dann in die in Figur 15 dargestellte Position gebracht. Daraufhin kann der Einsatz 16 nun leicht im Bereich seines gegenüberliegenden Endes 49 aus der Aufnahme 42 bzw. der Vertiefung 44 entnommen werden.

## Patentansprüche

1. Station (1) zur Aufladung und Aufbewahrung von Telekommunikationsendgeräten (20, 21, 22), mit einer Plattform (2) in einer oberen Etage der Station (1) mit einer Mehrzahl von hintereinander angeordneten länglichen Aufnahmen (6, 7, 8, 9) für jeweils mindestens ein Telekommunikationsendgerät (20, 21, 22), wobei unterhalb der Plattform (2) ein Freiraum (4) in der unteren Etage der Station (1) verbleibt und in den Aufnahmen (6, 7, 8, 9) Durchführungen (11, 12, 13) für Versorgungskabel (18, 19) und/oder Steckverbindungen (16, 17) der Telekommunikationsendgeräte (20, 21, 22) zwischen Plattform (2) und
Freiraum (4) vorgesehen sind,
**dadurch gekennzeichnet,**
**dass** die Station (1) ein Gehäuse (3) zur Aufnahme der Plattform (2) aufweist und in dem Freiraum (4) unterhalb der Plattform (2) eine Verteilerbox (33) angeordnet ist, an welche die Telekommunikationsendgeräte (20, 21, 22) anschließbar und über ein gemeinsames Versorgungskabel (34) mit dem Versorgungsnetz verbindbar sind, wobei das Gehäuse (3) mindestens eine Öffnung (40, 41) zur Durchführung der Versorgungskabel (34) zur Verbindung mit dem Versorgungsnetz aufweist und die Durchführungen (11, 12, 13) für die Versorgungskabel (18, 19) und/oder Steckverbindungen (16, 17) an der Unterseite (29, 30, 31, 32) der Aufnahmen (6, 7, 8, 9) vorgesehen sind.

2. Station nach Anspruch 1,
**dadurch gekennzeichnet,**
**dass** die Plattform (2) auf mindestens zwei Füßen (23, 24) gelagert ist.

3. Station nach Anspruch 1,
**dadurch gekennzeichnet,**
**dass** die Plattform (2) als Aufnahmen (6, 7, 8, 9) für die Geräte (20, 21, 22) dienende Vertiefungen (25, 26, 27, 28) aufweist, deren Länge, Breite und Tiefe auf handelsübliche Telekommunikationsendgeräte (20, 21, 22) abgestimmt ist.

4. Station nach Anspruch 1,
**dadurch gekennzeichnet,**
**dass** die Plattform (2) an zwei gegenüber liegenden Flanken (38, 39) Ausnehmungen (36, 37) zur Demontage der Plattform (2) aus dem Gehäuse (3) aufweist.

5. Station nach Anspruch 1,
**dadurch gekennzeichnet,**
**dass** das Gehäuse (3) und/oder die Plattform (2) Steckanschlüsse (60, 61) aufweisen.

6. In ein Möbel (5) integrierte Station (1) nach Anspruch 1, zur Aufladung und Aufbewahrung von Telekommunikationsendgeräten (20, 21, 22), mit mindestens einer in einen waagerecht verlaufenden Abschnitt (10) des Möbels (5) integrierten länglichen Aufnahme (42) für jeweils mindestens ein Telekommunikationsendgerät (20, 21, 22), wobei in dem waagerecht verlaufenden Abschnitt (10) des Möbels (5) eine Durchführung (43) für Versorgungskabel (18, 19) und/oder Steckverbindungen (16, 17) der Telekommunikationsendgeräte (20, 21, 22) vorgesehen ist.

7. Station nach Anspruch 6,
**dadurch gekennzeichnet,**
**dass** die Aufnahme (42) mehrere, zu unterschiedlichen Telekommunikationsendgeräten (20, 21, 22) korrespondierend ausgebildete Vertiefungen (44, 52) aufweist.

8. Station nach Anspruch 7,
**dadurch gekennzeichnet,**
**dass** die Vertiefungen (44, 52) nach ihren Abmessungen abgestuft ausgebildet sind, wobei kleinere Vertiefungen (52) in den Boden (60) der nächst größeren Vertiefung (44) eingelassen sind.

9. Station nach Anspruch 6,
**dadurch gekennzeichnet,**
**dass** die Durchführung (43) für die Versorgungskabel (18, 19) und/oder Steckverbindungen (16, 17) in dem Boden (45) der Aufnahme (42) vorgesehen ist.

10. Station nach Anspruch 6,
**dadurch gekennzeichnet,**
**dass** das Möbel (5) mit einem korrespondierend zu der Aufnahme (42) ausgebildeten Einsatz (46) ausgerüstet ist.

11. Station nach Anspruch 10,
**dadurch gekennzeichnet,**
**dass** der Einsatz (46) an mindestens einem Ende (49, 50) an seiner Unterseite (51) eine Abschrägung (47, 48) aufweist.

## Claims

1. Charging and docking station (1) for telecommunications terminal equipment (20, 21, 22), with a platform (2) on an upper level of the station (1) with a multiplicity of successively arranged receptacles (6, 7, 8, 9), each holding at least one telecommunications terminal (20, 21, 22), whereby underneath the platform (2) a free space (4) remains in the lower level of the station (1) and in the receptacles (6, 7, 8, 9) slots (11, 12, 13) are provided for supply cables (18, 19) and/or plug connectors (16, 17) for the telecommunications terminals (20, 21, 22) between platform (2) and free space (4),
**characterised in that**
the station (1) has a housing (3) for holding the platform (2) and in the free space (4) underneath the platform (2) there is a distributor box (33) to which the telecommunications terminals (20, 21, 22) can be connected and can be connected to the mains supply via a common supply cable (34), whereby the housing (3) has at least one opening (40, 41) for conducting the supply cables (34) to the connection with the mains supply and the slots (11, 12, 13) for the supply cables (18, 19) and/or plug connectors (16, 17) are provided on the underside (29, 30, 31, 32) of the receptacles (6, 7, 8, 9).

2. Station according to claim 1,
**characterised in that**
platform (2) is supported on at least two stands (23, 24).

3. Station according to claim 1,
**characterised in that**
platform (2) has indentations (25, 26, 27, 28) serving as receptacles (6, 7, 8, 9) for the equipment (20, 21, 22) whose length, width and depth are coordinated to standard telecommunications terminals (20, 21, 22).

4. Station according to claim 1,
**characterised in that**
platform (2) has recesses (36, 37) on two opposite sides (38, 39) for dismantling the platform (2) from the housing (3).

5. Station according to claim 1,
**characterised in that**
the housing (3) and/or the platform (2) have plug connectors (60, 61).

6. Station (1) according to claim 1 integrated in a piece of furniture (5) for charging and holding telecommunications terminal equipment (20, 21, 22), having at least one long holder (42) for at least one telecommunications terminal (20, 21, 22) integrated in a horizontally running section (10) of the piece of furniture (5), whereby a slot (43) for supply cables (18, 19) and/or plug connectors (16, 17) of the telecommunications terminals (20, 21, 22) is provided in the horizontally running section (10) of the piece of furniture (5).

7. Station according to claim 6,
**characterised in that**
the holder (42) has several recesses (44, 52) designed correspondingly for different telecommunications terminal equipment (20, 21, 22).

8. Station according to claim 7,
**characterised in that**
the recesses (44, 52) are formed graduated in accordance with their dimensions, whereby smaller recesses (52) are let into the bottom (60) of the next larger recess (44).

9. Station according to claim 6,
**characterised in that**
the slot (43) for the supply cables (18, 19) and/or plug connectors (16, 17) is provided in the bottom (45) of the holder (42).

10. Station according to claim 6,
**characterised in that**
the piece of furniture (5) has an insert (46) designed correspondingly to the holder (42).

11. Station according to claim 10,
**characterised in that**
the insert (46) has a bevel (47, 48) at at least one end (49, 50) on its underside (51).

## Revendications

1. Poste (1) destiné à recharger et à conserver des terminaux de télécommunication (20, 21, 22), avec une plateforme (2) au dernier étage du poste (1) possédant une majorité de réceptions longitudinales (6, 7, 8, 9) disposées les unes dernières les autres, chacune destinée à au moins un terminal de télécommunication (20, 21, 22), sachant qu'un espace libre (4) reste prévu en dessous de la plateforme (2) à l'étage inférieur du poste (1), ainsi que dans les réceptions (6, 7, 8, 9) des passages (11, 12, 13) pour des câbles d'alimentation (18, 19) et/ou des raccords enfichés (16, 17) des terminaux de télécommunication (20, 21, 22) entre la plateforme (2) et l'espace libre (4),
**caractérisé par le fait**
**que** le poste (1) présente un boîtier (3) destiné à réceptionner la plateforme (2) et que dans l'espace libre (4) en dessous de la plateforme (2) est disposée une boîte de distribution (33) sur laquelle les terminaux de télécommunication (20, 21, 22) peuvent être raccordés et reliés au réseau d'alimentation par le biais d'un câble d'alimentation (34) commun, sachant que le boîtier (3) présente au moins une ouverture (40, 41) pour le passage des câbles d'alimentation (34) destinés à établir la connexion au réseau d'alimentation et que des passages (11, 12, 13) pour les câbles d'alimentation (18, 19) et/ou raccords enfichés (16, 17) sont prévus sur la face inférieure (29, 30, 31, 32) des réceptions (6, 7, 8, 9).

2. Poste selon la revendication 1,
**caractérisé par le fait**
**que** la plateforme (2) est amortie sur au moins deux pieds (23, 24).

3. Poste selon la revendication 1,
**caractérisé par le fait**
**que** la plateforme (2) présente des renfoncements (25, 26, 27, 28) servant de réceptions (6, 7, 8, 9) destinées aux appareils (20, 21, 22), dont la longueur, la largeur et la profondeur sont harmonisés par rapport aux terminaux de télécommunication (20, 21, 22) usuels du commerce.

4. Poste selon la revendication 1,
**caractérisé par le fait**
**que** la plateforme (2) présente sur deux flancs situés l'un en face de l'autre (38, 39) des réservations (36, 37) destinées au démontage de la plateforme (2) hors du boîtier (3).

5. Poste selon la revendication 1,
**caractérisé par le fait**
) que le boîtier (3) et/ou la plateforme (2) présentent des prises enfichables (60, 61).

6. Poste (1) selon la revendication 1 intégré dans un meuble (5), destiné à recharger et à conserver des terminaux de télécommunication (20, 21, 22), avec au moins une réception (42) longitudinale intégrée dans une section (10) du meuble (5) ayant un parcours horizontal, chacune pour au moins un terminal de télécommunication (20, 21, 22), sachant que dans la section de parcours horizontal (10) du meuble (5) est prévu un passage (43) pour les câbles d'alimentation (18, 19) et/ou les raccords enfichés (16, 17) des terminaux de télécommunication (20, 21, 22).

7. Poste selon la revendication 6,
**caractérisé par le fait**
**que** la réception (42) présente plusieurs renfoncements (44, 52) formés pour correspondre à différents terminaux de télécommunication (20, 21, 22).

8. Poste selon la revendication 7,
**caractérisé par le fait**
**que** les renfoncements (44, 52) sont formés de façon échelonnée d'après leurs dimensions, sachant que des renfoncements relativement petits (52) sont insérés i dans le fond (60) du prochain plus grand renfoncement (44).

9. Poste selon la revendication 6,
**caractérisé par le fait**
**que** le passage (43) pour les câbles d'alimentation (18, 19) et/ou les raccords enfichés (16, 17) est prévu dans le fond (45) de la réception (42).

10. Poste selon la revendication 6,
**caractérisé par le fait**
**que** le meuble (5) est équipé d'un insert (46) formé de manière à correspondre à la réception (42).

11. Poste selon la revendication 10,
**caractérisé par le fait**
**que** l'insert (46) présente sur au moins une extrémité (49, 50) un chanfrein (47, 48) sur sa face inférieure (51).
